# EUROPEAN PATENT SPECIFICATION

(11) **EP 3 387 037 B1**
(45) Date of publication and mention of the grant of the patent: **06.11.2019**
(21) Application number: 16805795.8
(22) Date of filing: 02.12.2016
(51) Int. Cl.: C08G 18/79, C08G 18/80, C08G 18/08, C08G 18/28, C09D 175/08, C08K 5/52

(54) **WATER-DISPERSIBLE POLYISOCYANATES**
WASSERDISPERGIERBARE POLYISOCYANATE
POLYISOCYANATES DISPERSIBLES DANS L'EAU

(30) Priority: 09.12.2015 EP 15198566
(43) Date of publication of application: 17.10.2018
(73) Proprietor: BASF SE, 67056 Ludwigshafen am Rhein (DE)
(72) Inventor: ROLLER, Sebastian, 68167 Mannheim (DE); LUCAS, Frederic, 68159 Mannheim (DE)
(74) Representative: BASF IP Association
(86) International application number: PCT/EP2016/079519
(87) International publication number: WO 2017/097668

(56) References cited:
- US-A1- 2015 225 544

## Description

The present invention relates to improved water-dispersible polyisocyanates for coatings with enhanced optical properties, more particularly for two-component polyurethane coating materials.

Water-dispersible polyisocyanates have already been known for a long time and are frequently used as a crosslinker component together with aqueous polyol dispersions in aqueous coating systems. A large number of constituents with a water-dispersing effect have become established for such polyisocyanates.

DE 4113160 A1 describes water-dispersible polyisocyanates which contain not only polyether groups but also carboxylate groups.

Polyisocyanates containing such carboxylate groups as actively dispersing groups, however, exhibit inadequate stability on storage and an insufficient dispersibility.

EP 198343 A2, for instance, describes polyisocyanates which contain carbodiimide groups and which are rendered water-dispersible by means of sulfonate groups and, if appropriate, polyether groups. Disclosed explicitly as synthesis components carrying sulfonate groups are alkoxylated sulfonates, and sulfonated diisocyanates, which have to be prepared specially.

In WO 01/88006 A1 (= US 6767958) water-dispersable polyisocyanates bearing both poly ethylene oxide groups and sulfonate groups are disclosed.

WO 2009/010469 (= US 2010/0183883) discloses water-dispersible polyisocyanates bearing sulfonate groups bound to an aromatic ring and polyether groups. The polyisocyanates are easily emulsifyable and coatings obtained with such water-dispersible polyisocyanates exhibit high gloss.

WO 98/56843 and WO 09/71784 disclose water-dispersible polyisocyanates with phosphate compounds as emulgators.

However, two-component polyurethane coatings obtained with such polyisocyanate often lack a glossy appearance.

WO 2014/048634 discloses water-dispersible polyisocyanates which contain not only phospohate groups but also monofunctional polyalkylene glycol and exhibit not only high hardness but also good gloss and good drying properties.

However, the combination of ease of incorporation of these water-dispersible polyisocyanates into aqueous polyol dispersions at low shear rates, for example by hand-incorporation, and at the same time good optical properties of the coatings obtained with these coating materials is inadequate.

It was an object of the present invention to provide water-dispersible polyisocyanates which feature not only high ease of incorporation, even at low shear rates, for example by hand-incorporation, but also improved optical properties.

This object has been achieved by means of water-dispersible polyisocyanates (A), comprising as components
(a) at least one diisocyanate or polyisocyanate,
(b) at least one surfactant comprising an amine and a mixture of compounds based on the following formulae (I) and (II):, 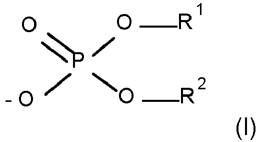 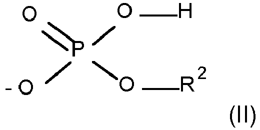 in which
   R¹ and R² independently of one another are alkyl, cycloalkyl or aryl, it being possible for each of the stated radicals to be substituted by aryl, alkyl, aryloxy, alkyloxy, heteroatoms and/or heterocycles,
   said mixture of compounds of formulae (I) and (II) being characterised in that the molar ratio between compound (II), i.e. the monoester-type compound, and compound (I), i.e. the diester-type compound, is from 5:95 to 95:5,
(c) at least one monofunctional polyalkylene glycol,
(d) optionally at least one high molecular mass diol or polyol,
(e) optionally at least one low molecular mass diol or polyol, and
(f) at least one solvent (E), which comprises (i) at least one carboxylic acid ester group and (ii) a hydrophilic-lipophilic balance (HLB) value of 7,8 or less calculated by the following formula HLB = 20 ^{∗}(Mₕ/M), wherein Mh means mole weight of heteroatoms and M means mole weight of the molecule.

Such polyisocyanates (A) of the invention feature not only high ease of incorporation into aqueous polyol dispersions, even at low shear rates, for example by hand-incorporation, but also improved optical properties. Moreover, they give coatings featuring good hardness, and high gloss.

Synthesis component (a) is at least one, one to three for example, one to two for preference, and more preferably precisely one diisocyanate or polyisocyanate.

The monomeric isocyanates used may be aromatic, aliphatic or cycloaliphatic, preferably aliphatic or cycloaliphatic, which is referred to for short in this text as (cyclo)aliphatic. Aliphatic isocyanates are particularly preferred.

Aromatic isocyanates are those which comprise at least one aromatic ring system, in other words not only purely aromatic compounds but also araliphatic compounds.

Cycloaliphatic isocyanates are those which comprise at least one cycloaliphatic ring system.

Aliphatic isocyanates are those which comprise exclusively linear or branched chains, i.e., acyclic compounds.
The monomeric isocyanates are preferably diisocyanates, which carry precisely two isocyanate groups. They can, however, in principle also be monoisocyanates having an isocyanate group.

In principle, higher isocyanates having on average more than 2 isocyanate groups are also possible. Suitability is possessed for example by triisocyanates, such as triisocyanatononane, 2,6-diisocyanato-1-hexanoic acid 2'-isocyanatoethyl ester, 2,4,6-triisocyanatotoluene, triphenylmethane triisocyanate or 2,4,4'-triisocyanatodiphenyl ether, or the mixtures of diisocyanates, triisocyanates, and higher polyisocyanates that are obtained, for example, by phosgenation of corresponding aniline/formaldehyde condensates and represent methylene-bridged polyphenyl polyisocyanates and the corresponding ring-hydrogenated isocyanates.

These monomeric isocyanates do not contain any substantial products of reaction of the isocyanate groups with themselves.

The monomeric isocyanates are preferably isocyanates having 4 to 20 carbon atoms. Examples of typical diisocyanates are aliphatic diisocyanates such as tetramethylene diisocyanate, pentamethylene 1,5-diisocyanate, hexamethylene diisocyanate (1,6-diisocyanatohexane), octamethylene diisocyanate, decamethylene diisocyanate, dodecamethylene diisocyanate, tetradec-amethylene diisocyanate, derivatives of lysine diisocyanate (e.g. lysine methyl ester diisocyanate, lysine ethyl ester diisocyanate), trimethylhexane diisocyanate or tetramethylhexane diisocyanate, cycloaliphatic diisocyanates such as 1,4-, 1,3- or 1,2-diisocyanatocyclo-hexane, 4,4'-or 2,4'-di(isocyanatocyclohexyl)methane, 1-isocyanato-3,3,5-trimethyl-5-(iso-cyanatomethyl)cyclohexane (isophorone diisocyanate), 1,3- or 1,4-bis(isocyanatomethyl)cyclohexane or 2,4-, or 2,6-diisocyanato-1-methylcyclohexane, and also 3 (or 4), 8 (or 9)-bis(isocy-anatomethyl)tricyclo-[5.2.1.0^{2,6}]decane isomer mixtures, and also aromatic diisocyanates such as tolylene 2,4- or 2,6-diisocyanate and the isomer mixtures thereof, m- or p-xylylene diisocyanate, 2,4'- or 4,4'-diisocyanatodiphenylmethane and the isomer mixtures thereof, phenylene 1,3- or 1,4-diisocyanate, 1-chlorophenylene 2,4-diisocyanate, naphthylene 1,5-diisocyanate, diphenylene 4,4'-diisocyanate, 4,4'-diisocyanato-3,3'-dimethylbiphenyl, 3-methyldiphenylmethane 4,4'-diisocyanate, tetramethylxylylene diisocyanate, 1,4-diisocyanatobenzene or diphenyl ether 4,4'-diisocyanate.

Particular preference is given to hexamethylene 1,6-diisocyanate, 1,3-bis(isocyanatomethyl)cyclohexane, isophorone diisocyanate, and 4,4'- or 2,4'-di(isocyanatocyclohexyl)methane, very particular preference to isophorone diisocyanate and hexamethylene 1,6-diisocyanate, and especial preference to hexamethylene 1,6-diisocyanate.

Mixtures of said isocyanates may also be present.

Isophorone diisocyanate is usually in the form of a mixture, specifically a mixture of the cis and trans isomers, generally in a proportion of about 60:40 to 80:20 (w/w), preferably in a proportion of about 70:30 to 75:25, and more preferably in a proportion of approximately 75:25.

Dicyclohexylmethane 4,4'-diisocyanate may likewise be in the form of a mixture of the different cis and trans isomers.

For the present invention it is possible to use not only those diisocyanates obtained by phosgenating the corresponding amines but also those prepared without the use of phosgene, i.e., by phosgene-free processes. According to EP-A-0 126 299 (US 4 596 678), EP-A-126 300 (US 4 596 679), and EP-A-355 443 (US 5 087 739), for example, (cyclo)aliphatic diisocyanates, such as hexamethylene 1,6-diisocyanate (HDI), isomeric aliphatic diisocyanates having 6 carbon atoms in the alkylene radical, 4,4'- or 2,4'-di(isocyanatocyclohexyl)methane, and 1-iso-cyanato-3-isocyanatomethyl-3,5,5-trimethylcyclohexane (isophorone diisocyanate or IPDI), for example, can be prepared by reacting the (cyclo)aliphatic diamines with, for example, urea and alcohols to give (cyclo)aliphatic biscarbamic esters and subjecting said esters to thermal cleavage into the corresponding diisocyanates and alcohols. The synthesis takes place usually continuously in a circulation process and in the presence, if appropriate, of N-unsubstituted carbamic esters, dialkyl carbonates, and other by-products recycled from the reaction process. Diisocyanates obtained in this way generally contain a very low or even unmeasurable fraction of chlorinated compounds, which is advantageous, for example, in applications in the electronics industry.

In one embodiment of the present invention the isocyanates used have a total hydrolyzable chlorine content of less than 200 ppm, preferably of less than 120 ppm, more preferably less than 80 ppm, very preferably less than 50 ppm, in particular less than 15 ppm, and especially less than 10 ppm. This can be measured by means, for example, of ASTM specification D4663-98. Of course, though, monomeric isocyanates having a higher chlorine content can also be used, of up to 500 ppm, for example.

It will be appreciated that it is also possible to employ mixtures of those monomeric isocyanates which have been obtained by reacting the (cyclo)aliphatic diamines with, for example, urea and alcohols and cleaving the resulting (cyclo)aliphatic biscarbaminic esters, with those diisocyanates which have been obtained by phosgenating the corresponding amines.

The polyisocyanates (a) to which the monomeric isocyanates can be oligomerized are generally characterized as follows:
The average NCO functionality of such compounds is in general at least 1.8 and can be up to 8, preferably 2 to 5, and more preferably 2.4 to 4.

The isocyanate group content after oligomerization, calculated as NCO = 42 g/mol, is generally from 5% to 25% by weight unless otherwise specified.

The polyisocyanates (a) are preferably compounds as follows:
1) Polyisocyanates containing isocyanurate groups and derived from aromatic, aliphatic and/or cycloaliphatic diisocyanates. Particular preference is given in this context to the corresponding aliphatic and/or cycloaliphatic isocyanatoisocyanurates and in particular to those based on hexamethylene diisocyanate and isophorone diisocyanate. The isocyanurates present are, in particular, tris-isocyanatoalkyl and/or trisisocyanatocycloalkyl isocyanurates, which constitute cyclic trimers of the diisocyanates, or are mixtures with their higher homologs containing more than one isocyanurate ring. The isocyanatoisocyanurates generally have an NCO content of 10% to 30% by weight, in particular 15% to 25% by weight, and an average NCO functionality of 2.6 to 8.
2) Polyisocyanates containing uretdione groups and having aromatically, aliphatically and/or cycloaliphatically attached isocyanate groups, preferably aliphatically and/or cycloaliphatically attached, and in particular those derived from hexamethylene diisocyanate or isophorone diisocyanate. Uretdione diisocyanates are cyclic dimerization products of diisocyanates.
   The polyisocyanates containing uretdione groups are obtained in the context of this invention as a mixture with other polyisocyanates, more particularly those specified under 1). For this purpose the diisocyanates can be reacted under reaction conditions under which not only uretdione groups but also the other polyisocyanates are formed, or the uretdione groups are formed first of all and are subsequently reacted to give the other polyisocyanates, or the diisocyanates are first reacted to give the other polyisocyanates, which are subsequently reacted to give products containing uretdione groups.
3) Polyisocyanates containing biuret groups and having aromatically, cycloaliphatically or aliphatically attached, preferably cycloaliphatically or aliphatically attached, isocyanate groups, especially tris(6-isocyanatohexyl)biuret or its mixtures with its higher homologs. These polyisocyanates containing biuret groups generally have an NCO content of 18% to 22% by weight and an average NCO functionality of 2.8 to 6.
4) Polyisocyanates containing urethane and/or allophanate groups and having aromatically, aliphatically or cycloaliphatically attached, preferably aliphatically or cycloaliphatically attached, isocyanate groups, such as may be obtained, for example, by reacting excess amounts of diisocyanate, such as of hexamethylene diisocyanate or of isophorone diisocyanate, with mono- or polyhydric alcohols (a). These polyisocyanates containing urethane and/or allophanate groups generally have an NCO content of 12% to 24% by weight and an average NCO functionality of 2.1 to 4.5. Polyisocyanates of this kind containing urethane and/or allophanate groups may be prepared without catalyst or, preferably, in the presence of catalysts, such as ammonium carboxylates or ammonium hydroxides, for example, or allophanatization catalysts, such as Zn(ll) compounds, for example, in each case in the presence of monohydric, dihydric or polyhydric, preferably monohydric, alcohols. The polyisocyanates containing urethane and/or allophanate groups can also be prepared in a mixture with other polyisocyanates, more particularly those specified under 1).
5) Polyisocyanates comprising oxadiazinetrione groups, derived preferably from hexamethylene diisocyanate or isophorone diisocyanate. Polyisocyanates of this kind comprising oxadiazinetrione groups are accessible from diisocyanate and carbon dioxide.
6) Polyisocyanates comprising iminooxadiazinedione groups, derived preferably from hexamethylene diisocyanate or isophorone diisocyanate. Polyisocyanates of this kind comprising iminooxadiazinedione groups are preparable from diisocyanates by means of specific catalysts.
7) Uretonimine-modified polyisocyanates.
8) Carbodiimide-modified polyisocyanates.
9) Hyperbranched polyisocyanates, of the kind known for example from DE-A1 10013186 or DE-A1 10013187.
10) Polyurethane-polyisocyanate prepolymers, from di- and/or polyisocyanates with alcohols.
11) Polyurea-polyisocyanate prepolymers.
12) The polyisocyanates 1)-11), preferably 1), 3), 4) and 6), can be converted, following their preparation, into polyisocyanates containing biuret groups or urethane/allophanate groups and having aromatically, cycloaliphatically or aliphatically attached, preferably (cyclo)aliphatically attached, isocyanate groups. The formation of biuret groups, for example, is accomplished by addition of water, water donor compounds (e.g., tert-butanol), or by reaction with amines. The formation of urethane and/or allophanate groups is accomplished by reaction with monohydric, dihydric or polyhydric, preferably monohydric, alcohols, in the presence if appropriate of suitable catalysts. These polyisocyanates containing biuret or urethane/allophanate groups generally have an NCO content of 18% to 22% by weight and an average NCO functionality of 2.8 to 6.
13) Hydrophilically modified polyisocyanates, i.e., polyisocyanates which as well as the groups described under 1-12 also comprise groups which result formally from addition of molecules containing NCO-reactive groups and hydrophilizing groups to the isocyanate groups of above molecules. The latter groups are nonionic groups such as alkylpoly-ethylene oxide and/or ionic groups derived from phosphoric acid, phosphonic acid, sulfuric acid or sulfonic acid, and/or their salts.
14) Modified polyisocyanates for dual care applications, i.e., polyisocyanates which as well as the groups described under 1-12 also comprise groups resulting formally from addition of molecules containing NCO-reactive groups and UV-crosslinkable or actinic-radiation-crosslinkable groups to the isocyanate groups of above molecules. These molecules are, for example, hydroxyalkyl (meth)acrylates and other hydroxyl-vinyl compounds.
The diisocyanates or polyisocyanates recited above may also be present at least partly in blocked form.

Classes of compounds used for blocking are described in D.A. Wicks, Z.W. Wicks, Progress in Organic Coatings, 36, 148-172 (1999), 41, 1-83 (2001) and also 43, 131-140 (2001).

Examples of classes of compounds used for blocking are phenols, imidazoles, triazoles, pyrazoles, oximes, N-hydroxyimides, hydroxyl benzoic esters, secondary amines, lactams, CH-acidic cyclic ketones, malonic esters or alkyl acetoacetates.

In one preferred embodiment of the present invention the polyisocyanate (a) is selected from the group consisting of isocyanurates, biurets, urethanes and allophanates, preferably from the group consisting of isocyanurates, urethanes and allophanates, more preferably from the group consisting of isocyanurates and allophanates; in particular it is a polyisocyanate containing isocyanurate groups.

In one particularly preferred embodiment the polyisocyanate (a) encompasses polyisocyanates comprising isocyanurate groups and obtained from hexamethylene 1,6-diisocyanate.

In one further particularly preferred embodiment the polyisocyanate (a) encompasses a mixture of polyisocyanates comprising isocyanurate groups and obtained from hexamethylene 1,6-diisocyanate and from isophorone diisocyanate.

In one particularly preferred embodiment the polyisocyanate (a) encompasses a mixture comprising low-viscosity polyisocyanates, preferably polyisocyanates comprising isocyanurate groups, having a viscosity of 600-1500 mPa^{∗}s, more particularly below 1200 mPa^{∗}s, low-viscosity urethanes and/or allophanates having a viscosity of 200-1600 mPa^{∗}s, more particularly 600-1500 mPa^{∗}s, and/or polyisocyanates comprising iminooxadiazinedione groups.

In this specification the viscosity at 23°C in accordance with DIN EN ISO 3219/A.3 is specified, in a cone/plate system at a shear rate of 250 s⁻¹, unless noted otherwise.

### Component (b)

The composition according to the invention particularly advantageously contains a mixture of compounds based on the following formulae (I) and (II): 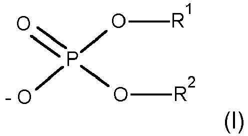 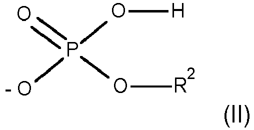 R¹ and R² being as defined above for formulae (I) and (II).

R¹ and R² independently of one another are alkyl, cycloalkyl or aryl, it being possible for each of the stated radicals to be substituted by aryl, alkyl, aryloxy, alkyloxy, heteroatoms and/or heterocycles.

Definitions therein are as follows:
C₁ - C₁₈ alkyl substituted if appropriate by aryl, alkyl, aryloxy, alkyloxy, heteroatoms and/or heterocycles is for example methyl, ethyl, propyl, isopropyl, n-butyl, sec-butyl, tert-butyl, pentyl, hexyl, heptyl, octyl, 2-ethylhexyl, 2,4,4-trimethylpentyl, decyl, dodecyl, tetradecyl, hexadecyl, octadecyl, 1,1-dimethylpropyl, 1,1-dimethylbutyl, 1,1,3,3-tetramethylbutyl, benzyl, 1-phenylethyl, 2-phenylethyl, α,α-dimethylbenzyl, benzhydryl, p-tolylmethyl,1-(p-butylphenyl)ethyl, p-chlorobenzyl, 2,4-dichlorobenzyl, p-methoxybenzyl, m-ethoxybenzyl, 2-cyanoethyl, 2-cyanopropyl, 2-methoxycarbonethyl, 2-ethoxycarbonylethyl, 2-butoxycarbonylpropyl, 1,2-di(methoxycarbonyl)ethyl, 2-methoxyethyl, 2-ethoxyethyl, 2-butoxyethyl, diethoxymethyl, diethoxyethyl, 1,3-dioxolan-2-yl, 1,3-dioxan-2-yl, 2-methyl-1,3-dioxolan-2-yl, 4-methyl-1,3-dioxolan-2-yl, 2-isopropoxyethyl, 2-butoxypropyl, 2-octyloxyethyl, chloromethyl, 2-chloroethyl, trichloromethyl, trifluoromethyl, 1,1-dimethyl-2-chloroethyl, 2-methoxyisopropyl, 2-ethoxyethyl, butylthiomethyl, 2-dodecylthioethyl, 2-phenylthioethyl, 2,2,2-trifluoroethyl, 2-phenoxyethyl, 2-phenoxypropyl, 3-phenoxypropyl, 4-phenoxybutyl, 6-phenoxyhexyl, 2-methoxyethyl, 2-methoxypropyl, 3-methoxypropyl, 4-methoxybutyl, 6-methoxyhexyl, 2-ethoxyethyl, 2-ethoxypropyl, 3-ethoxypropyl, 4-ethoxybutyl or 6-ethoxyhexyl,
C₆ - C₁₂ aryl substituted if appropriate by aryl, alkyl, aryloxy, alkyloxy, heteroatoms and/or heterocycles is for example phenyl, tolyl, xylyl, α-naphthyl, β-naphthyl, 4-biphenylyl, chlorophenyl, dichlorophenyl, trichlorophenyl, difluorophenyl, methylphenyl, dimethylphenyl, trimethylphenyl, ethylphenyl, diethylphenyl, *iso*-propylphenyl, tert-butylphenyl, dodecylphenyl, methoxyphenyl, dimethoxyphenyl, ethoxyphenyl, hexyloxyphenyl, methylnaphthyl, isopropylnaphthyl, chloronaphthyl, ethoxynaphthyl, 2,6-dimethylphenyl, 2,4,6-trimethylphenyl, 2,6-dimethoxyphenyl, 2,6-dichlorophenyl, 4-bromophenyl, 2- or 4-nitrophenyl, 2,4- or 2,6-dinitrophenyl, 4-dimethylaminophenyl, 4-acetylphenyl, methoxyethylphenyl or ethoxymethylphenyl, and
C₅ - C₁₂ cycloalkyl substituted if appropriate by aryl, alkyl, aryloxy, alkyloxy, heteroatoms and/or heterocycles is for example cyclopentyl, cyclohexyl, cyclooctyl, cyclododecyl, methylcyclopentyl, dimethylcyclopentyl, methylcyclohexyl, dimethylcyclohexyl, diethylcyclohexyl, butylcyclohexyl, methoxycyclohexyl, dimethoxycyclohexyl, diethoxycyclohexyl, butylthiocyclohexyl, chlorocyclohexyl, dichlorocyclohexyl, dichlorocyclopentyl, and a saturated or unsaturated bicyclic system such as norbornyl or norbornenyl, for example.

Preferably R¹ and R² independently of one another can be unsubstituted alkyl or unsubstituted aryl, more preferably methyl, ethyl, isopropyl, tert-butyl, hexyl, octyl, nonyl, decyl, dodecyl, phenyl or naphthyl, very preferably phenyl, methyl, ethyl, n-butyl, and 2-ethylhexyl, and more particularly ethyl, n-butyl, and 2-ethylhexyl.

The compounds (b) are preferably mono methyl phosphate, di methyl phosphate, mono ethyl phosphate, di ethyl phosphate, mono n-butyl phosphate, di n-butyl phosphate, mono 2-ethylhexyl phosphate, di 2-ethylhexyl phosphate, and mixtures thereof.

The mixture of compounds of formulae (I) and (II) is characterised in that the molar ratio between compound (II), i.e. the monoester-type compound, and compound (I), i.e. the diester-type compound, is from 5:95 to 95:5, preferably from 20:80 to 80:20, particularly preferably from 30:70 to 70:30 and especially preferably from 33:67 to 67:33.

Component (c) encompasses monofunctional polyalkylene oxide polyether alcohols, which are reaction products of suitable starter molecules with polyalkylene oxides.

Suitable starter molecules for preparing monohydric polyalkylene oxide polyether alcohols are thiol compounds, monohydroxy compounds of the general formula

R⁵-O-H

or secondary monoamines of the general formula

R⁶R⁷N-H,

in which
R⁵, R⁶ and R⁷ each independently of one another are C₁ - C₂₀ alkyl, C₂ - C₂₀ alkyl uninterrupted or interrupted by one or more oxygen and/or sulfur atoms and/or by one or more substituted or unsubstituted imino groups, or C₆ - C₁₂ aryl, C₅ - C₁₂ cycloalkyl or a five- to six-membered heterocycle containing oxygen, nitrogen and/or sulfur atoms, or R⁶ and R⁷ together form an unsaturated, saturated or aromatic ring which is uninterrupted or interrupted by one or more oxygen and/or sulfur atoms and/or by one or more substituted or unsubstituted imino groups, it being possible for the stated radicals to be substituted in each case by functional groups, aryl, alkyl, aryloxy, alkyloxy, halogen, heteroatoms and/or heterocycles.

Preferably R⁵, R⁶, and R⁷ independently of one another are C₁- to C₄ alkyl, i.e., methyl, ethyl, isopropyl, n-propyl, n-butyl, isobutyl, sec-butyl or tert-butyl; more preferably R⁵, R⁶, and R⁷ are methyl.

Examples of suitable monovalent starter molecules are saturated monoalcohols such as methanol, ethanol, n-propanol, isopropanol, n-butanol, isobutanol, sec-butanol, the isomeric pentanols, hexanols, octanols, and nonanols, n-decanol, n-dodecanol, n-tetradecanol, n-hexadecanol, n-octadecanol, cyclohexanol, cyclopentanol, the isomeric methylcyclohexanols or hydroxymethylcyclohexane, 3-ethyl-3-hydroxy-methyloxetane, or tetrahydrofurfuryl alcohol; unsaturated alcohols such as allyl alcohol, 1,1-dimethylallyl alcohol or oleyl alcohol, aromatic alcohols such as phenol, the isomeric cresols or methoxyphenols, araliphatic alcohols such as benzyl alcohol, anisyl alcohol or cinnamyl alcohol; secondary monoamines such as dimethylamine, diethylamine, dipropylamine, diisopropylamine, di-n-butylamine, diisobutylamine, bis(2-ethylhexyl)amine, N-methyl- and N-ethylcyclohexylamine or dicyclohexylamine, heterocyclic secondary amines such as morpholine, pyrrolidine, piperidine or 1H-pyrazole, and also amino alcohols such as 2-dimethylaminoethanol, 2-diethylaminoethanol, 2-diisopropylaminoethanol, 2-dibutylaminoethanol, 3-(dimethylamino)-1-propanol or 1-(dimethylamino)-2-propanol.

Examples of polyethers prepared starting from amines are the Jeffamine® M series, which represent methyl-capped polyalkylene oxides with an amino function, such as M-600 (XTJ-505), having a propylene oxide (PO)/ethylene oxide (EO) ratio of approximately 9:1 and a molar mass of approximately 600, M-1000 (XTJ-506): PO/EO ratio 3:19, molar mass approximately 1000, M-2005 (XTJ-507): PO/EO ratio 29:6, molar mass approximately 2000, or M-2070: PO/EO ratio 10:31, molar mass approximately 2000.

Alkylene oxides suitable for the alkoxylation reaction are ethylene oxide, propylene oxide, isobutylene oxide, vinyloxirane and/or styrene oxide, which may be used in any order or else in a mixture in the alkoxylation reaction.

Preferred alkylene oxides are ethylene oxide, propylene oxide, and their mixtures; ethylene oxide is particularly preferred.

Preferred polyether alcohols are those which are based on polyalkylene oxide polyether alcohols in whose preparation saturated aliphatic or cycloaliphatic alcohols of the abovementioned kind were used as starter molecules. Very particular preference is given to those based on polyalkylene oxide polyether alcohols prepared using saturated aliphatic alcohols having 1 to 4 carbon atoms in the alkyl radical. Particular preference is given to polyalkylene oxide polyether alcohols prepared starting from methanol.

The monohydric polyalkylene oxide polyether alcohols have on average in general at least two alkylene oxide units, preferably at least 5 alkylene oxide units, per molecule, more preferably at least 7, and very preferably at least 8 alkylene oxide units, more particularly ethylene oxide units.

The monohydric polyalkylene oxide polyether alcohols have on average in general up to 50 alkylene oxide units per molecule, preferably up to 30, more preferably up to 13, and very preferably up to 11 alkylene oxide units, more particularly ethylene oxide units.
The molar weight of the monohydric polyalkylene oxide polyether alcohols is preferably up to 4000, more preferably not above 2000 g/mol, very preferably not below 250 and more particularly 500 ± 200 g/mol.

Preferred polyether alcohols are therefore compounds of the formula

R⁵-O-[-Xᵢ-]ₖ-H

in which
R⁵ is as defined above,
k is an integer from 5 to 30, preferably 7 to 13, and more preferably 8 to 11, and
each Xᵢ for i = 1 to k can be selected independently from the group consisting
   of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, and -CHPh-CH₂-O-, preferably from the group consisting of -CH₂-CH₂-O-, -CH₂-CH(CH₃)-O- and -CH(CH₃)-CH₂-O-, and more preferably -CH₂-CH₂-O-
   in which Ph is phenyl and Vin is vinyl.

The polyalkylene oxide polyether alcohols are generally prepared by alkoxylating the starter compounds in the presence of a catalyst, such as of an alkali metal or alkaline earth metal hydroxide, oxide, carbonate or hydrogencarbonate, for example.

The polyalkylene oxide polyether alcohols can also be prepared with the aid of multimetal cyanide compounds, frequently also referred to as DMC catalysts, which have been known for a long time and have been widely described in the literature, as for example in US 3,278,457 and in US 5,783,513.

The DMC catalysts are typically prepared by reacting a metal salt with a cyanometalate compound. To enhance the properties of the DMC catalysts it is customary to add organic ligands during and/or after the reaction. A description of the preparation of DMC catalysts is found, for example, in US-A 3,278,457.

Typical DMC catalysts have the following general formula:

M¹ₐ[M²(CN)_{b}]_{d}•fM¹ⱼXₖ•h(H₂O)eL•ZP

in which
M¹ is a metal ion selected from the group comprising Zn²⁺, Fe²⁺, Fe³⁺, Co²⁺, Co³⁺, Ni²⁺, Mn²⁺, Sn²⁺, Sn⁴⁺, Pb²⁺, Al³⁺, Sr²⁺, Cr³⁺, Cd²⁺, Cu²⁺, La³⁺, Ce³⁺, Ce⁴⁺, Eu³⁺, Mg²⁺, Ti⁴⁺, Ag⁺, Rh²⁺, Ru²⁺, Ru³⁺, Pd²⁺,
M² is a metal ion selected from the group comprising Fe²⁺, Fe³⁺, Co²⁺, Co³⁺, Mn²⁺, Mn³⁺, Ni²⁺, Cr²⁺, Cr³⁺, Rh³⁺, Ru²⁺, Ir³⁺,
M¹ and M² are alike or different,
X is an anion selected from the group comprising halide, hydroxide, sulfate, hydrogen sulfate, carbonate, hydrogen carbonate, cyanide, thiocyanate, isocyanate, cyanate, carboxylate, oxalate, nitrate or nitrite (NO₂⁻) or a mixture of two or more of the aforementioned anions, or a mixture of one or more of the aforementioned anions with one of the uncharged species selected from CO, H₂O, and NO,
Y is an anion which is different than X and is selected from the group comprising halide, sulfate, hydrogen sulfate, disulfate, sulfite, sulfonate (=RSO₃⁻ with R=C1-C20 alkyl, aryl, C1-C20 alkylaryl), carbonate, hydrogen carbonate, cyanide, thiocyanate, isocyanate, isothiocyanate, cyanate, carboxylate, oxalate, nitrate, nitrite, phosphate, hydrogen phosphate, dihydrogen phosphate, diphosphate, borate, tetraborate, perchlorate, tetrafluoroborate, hexafluorophosphate, and tetraphenylborate,
L is a water-miscible ligand selected from the group comprising alcohols, aldehydes, ketones, ethers, polyethers, esters, polyesters, polycarbonate, ureas, amides, nitriles, and sulfides or mixtures thereof,
P is an organic additive selected from the group comprising polyethers, polyesters, polycarbonates, polyalkylene glycol sorbitan esters, polyalkylene glycol glycidyl ethers, polyacrylamide, poly(acrylamide-co-acrylic acid), polyacrylic acid, poly(acrylamide-co-maleic acid), polyacrylnitrile, polyalkyl acrylates, polyalkyl methacrylates, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), oxazoline polymers, polyalkyleneimines, maleic acid and maleic anhydride copolymer, hydroxylethylcellulose, polyacetates, ionic surface- and interface-active compounds, bile acid or salts, esters or amides thereof, carboxylic esters of polyhydric alcohols, and glycosides,
   and
a, b, d, g, n, r, s, j, k, and t are integral or fractional numbers greater than zero, e, f, h and z are integral or fractional numbers greater than or equal to zero,
   with
a, b, d, g, n, j, k, and r, and also s and t, being selected so as to ensure electroneutrality,
M³ being hydrogen or an alkali metal or alkaline earth metal, and
M⁴ being alkali metal ions or an ammonium ion (NH₄⁺) or an alkylammonium ion (R₄N⁺, R₃NH⁺, R₂NH₂⁺, RNH₃⁺ with R= C1-C20 alkyl).

In one particularly preferred embodiment of the invention M¹ is Zn²⁺ and M² is Co³⁺ or Co²⁺.

The metals M¹ and M² are alike particularly when they are cobalt, manganese or iron.

The residues of the catalyst may remain in the product obtained or may be neutralized using an acid, preferably hydrochloric acid, sulfuric acid or acetic acid, with the salts being subsequently removable preferably by means, for example, of washing or of ion exchangers. If appropriate, a partial neutralization may take place, and the product may be used further without further removal of the salts.

The optional synthesis component (d) encompasses high molecular mass diols or polyols, by which is meant a number-average molecular weight of at least 400, preferably 400 to 6000.

The compounds in question are more particularly dihydric or polyhydric polyester polyols and polyether polyols, the dihydric polyols being preferred.

Suitable polyester polyols include, in particular, the conventional reaction products of polyhydric alcohols with polybasic carboxylic acids, with the alcoholic component being employed in excess. The polybasic carboxylic acids may be aliphatic, cycloaliphatic, aromatic, heterocyclic or ethylenically unsaturated in nature and may also, if appropriate, carry halogen atom substituents. Instead of the polybasic carboxylic acids it is also possible for their anhydrides to be esterified. Examples of suitable polybasic starting carboxylic acids include the following: succinic acid, adipic acid, sebacic acid, phthalic acid, isophthalic acid, trimellitic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride or fumaric acid.

Polyhydric alcohols for use in excess include the following: ethane-1,2-diol, propane-1,2-diol, propane-1,3-diol, butane-1,2-diol, butane-1,3-diol, butane-1,4-diol, butene-1,4-diol, butyne-1,4-diol, pentane-1,5-diol and its positional isomers, hexane-1,6-diol, octane-1,8-diol, 1,4-bishydroxymethylcyclohexane, 2,2-bis4-hydroxycyclohexyl)propane, 2-methyl-1,3-propanediol, glycerol, trimethylolpropane, trimethylolethane, hexane-1,2,6-triol, butane-1,2,4-triol, diethylene glycol, triethylene glycol, tetraethylene glycol, polyethylene glycol having a molar mass of 378 to 900, preferably of 378 to 678, poly-1,2-propylene glycol or poly-1,3-propanediol with a molar mass of 134 to 1178, preferably 134 to 888, polyTHF having a molar mass of 162 to 2000, preferably between 378 and 1458, with particular preference 378 to 678.

Preference is given to polyester polyols formed from diols and dicarboxylic acids.

Further suitable polyester polyols are the adducts of lactones or lactone mixtures with dihydric alcohols used as starter molecules. Examples of preferred lactones are ε-caprolactone, β-propiolactone, γ-butyrolactone or methyl-ε-caprolactone.

Suitable starter molecules are more particularly the low molecular mass dihydric alcohols already specified as synthesis components for the polyester polyols.

Also suitable, of course, are polyesters formed from hydroxycarboxylic acids as synthesis components. Synthesis components (d) suitable as polyesters are, furthermore, also polycarbonates, of the kind obtainable, for example, from phosgene or diphenyl carbonate and, in excess, the low molecular mass dihydric alcohols specified as synthesis components for the polyester polyols.

Suitable synthesis components (d) with polyether polyol suitability include, preferably, polyether diols, of the kind obtainable, for example, by boron trifluoride-catalyzed linking of ethylene oxide, propylene oxide, butylene oxide, tetrahydrofuran, styrene oxide or epichlorohydrin to itself or to one another, or by addition reaction of these compounds, individually or in a mixture, with starter components containing reactive hydrogen atoms, such as water, polyfunctional alcohols or amines such as ethane-1,2-diol, propane-1,3-diol, 1,2- or 2,2-bis(4-hydroxyphenyl)-propane, or aniline. Furthermore, polyether-1,3-diols, examples being trimethylolpropane which is alkoxylated on one OH group and whose alkylene oxide chain is capped with an alkyl radical comprising 1 to 18 C atoms, are synthesis components (d) employed with preference.

Optional synthesis components (e) may be low molecular mass dihydric or polyhydric alcohols, among which the dihydric alcohols are preferred. Low molecular mass here denotes a number-average molecular weight from 62 to 399.

Suitable synthesis components (e) include ethane-1,2-diol, propane-1,2-diol, propane-1,3-diol, butane-1,2-diol, butane-1,3-diol, butane-1,4-diol, butene-1,4-diol, butyne-1,4-diol, pentane-1,5-diol and its positional isomers, hexane-1,6-diol, octane-1,8-diol, 1,4-bishydroxymethylcyclohexane, 2,2-bis(4-hydroxycyclohexyl)propane, 2-methyl-1,3-propanediol, hexane-1,2,6-triol, butane-1,2,4-triol, diethylene glycol, triethylene glycol, tetraethylene glycol, low molecular mass polyethylene glycol, poly-1,2-propylene glycol, poly-1,3-propanediol or polyTHF, neopentyl glycol, neopentyl glycol hydroxypivalate, 2-ethyl-1,3-propanediol, 2-methyl-1,3-propanediol, 2-ethyl-1,3-hexanediol, hydroquinone, bisphenol A, bisphenol F, bisphenol B, bisphenol S, 2,2-bis(4-hydroxycyclohexyl)propane, 1,1-, 1,2-, 1,3-, and 1,4-cyclohexanedimethanol, 1,2-, 1,3- or 1,4-cyclohexanediol and also polyhydric alcohols such as trimethylolbutane, trimethylolpropane, pentaerythritol, trimethylolethane, glycerol, ditrimethylolpropane, dipentaerythritol or sugar alcohols such as sorbitol, mannitol, diglycerol, threitol, erythritol, adonitol (ribitol), arabitol (lyxitol), xylitol, dulcitol (galactitol), maltitol or isomalt. Preference is given to using linear 1,ω-dihydroxyalkanes, more preferably butane-1,4-diol and hexane-1,6-diol.
The polyisocyanates (A) generally have the following construction, based on isocyanate groups (calculated as NCO with a molecular weight of 42 g/mol) in synthesis component (a):
(b) 0.5 to 30 wt% of compounds of formula (I) and/or (II), preferably 0.8 to 25 wt% and more preferably 1.0 to 20 wt%,
(c) at least 0.3 wt%, preferably at least 0.5, more preferably at least 1.0, and very preferably at least 1.2 wt%, and also up to 25 wt%, preferably up to 20, more preferably up to 15, and very preferably up to 10 wt%, based on isocyanate-reactive groups in (c),
(d) 0 to 15 wt%, preferably 0 to 10 wt%, more preferably 0 to 5 wt%, and very preferably 0 wt%, based on isocyanate-reactive groups in (d), and
(e) 0 to 15 wt%, preferably 0 to 10 wt%, more preferably 0 to 5 wt%, and very preferably 0 wt%, based on isocyanate-reactive groups in (e).

The NCO content of the polyisocyanates (A) of the invention is generally 13% by weight or more, preferably 14% by weight or more, more preferably 15% by weight or more, and very preferably 16% by weight or more, in conjunction with very good water-dispersibility. Normally 22% by weight is not exceeded.

Whether compound (b) is incorporated into the polyisocyanate or not is not relevant for the present invention. Without wishing to be bound to a theory it is assumed that at least a part of compound (b) of formula (II) is incorporated into polyisocyanate (A) by reaction of at least one free anionic oxygen group or hydroxy group. It is further assumed that the compounds of formula (II) remain in the water phase. For the sake of simplicity the compound (b) is referred to as "incorporated" into polyisocyanate (A) throughout the description, regardless of their actual state of binding.

In general the viscosity of the water-emulsifiable polyisocyanates of the invention is below 10 000 mPa^{∗}s, preferably below 9000 mPa^{∗}s, more preferably below 8000 mPa^{∗}s, very preferably below 7000 mPa^{∗}s, and more particularly between 800 and 6000 mPa^{∗}s.
The compound (b) in the polyisocyanates (A) of the invention are frequently at least partly neutralized with at least one base (B).

The bases in question may be basic alkali metal, alkaline earth metal or ammonium salts, more particularly the sodium, potassium, cesium, magnesium, calcium and barium salts, especially sodium, potassium, and calcium salts, in the form of hydroxides, oxides, hydrogen carbonates or carbonates, preferably in the form of the hydroxides.

Preferred compounds (B), however, are ammonia or amines, preferably tertiary amines. The tertiary amines in question are preferably those which are exclusively alkyl-substituted and/or cycloalkyl-substituted.
Examples of such amines are trimethylamine, triethylamine, tri-n-butylamine, ethyldiisopropylamine, dimethylbenzylamine, dimethylphenylamine, triethanolamine, cyclopentyldimethylamine, cyclopentyldiethylamine, cyclohexyldimethylamine, and cyclohexyldiethylamine.

Conceivable, though less preferred, are also heterocyclic amines, however, such as pyridine, imidazole, N-alkylated morpholine, piperidine, piperazine or pyrrolidone.

Generally speaking, the base (B) is used to neutralize 10 to 100 mol% of the acid groups present in (A), preferably 20 to 100 mol%, more preferably 40 to 100 mol%, very preferably 50 to 100 mol%, and more particularly 70 to 100 mol%.

The at least partial neutralization of component (b) in the polyisocyanate (A) can take place before, during or after the preparation of the polyisocyanate (A), preferably before the preparation.

An advantageous composition according to the present invention comprises as compound (B) an amine of the following formula (IV): 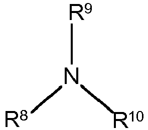 in which R⁸, R⁹ and R¹⁰ represent a hydrocarbon chain, advantageously selected from cycloalkyl or alkyl, it being possible for each of the stated radicals to be substituted by aryl, alkyl, aryloxy, alkyloxy, heteroatoms and/or heterocycles,

It is also possible that the R⁸, R⁹ and R¹⁰ groups form cyclic structures. R⁸ and R⁹ or R⁹ and R¹⁰ or R⁸ and R¹⁰ may thus together form a cyclic structure formed preferably of three to six carbon atoms and optionally containing at least one heteroatom preferably selected from oxygen or sulphur. N-ethyl morpholine, N-methyl morpholine and 1,2,2,6,6-pentamethylpiperidine are examples of cyclic structures of this type.

Advantageously, in the aforementioned formula (III), R⁸, R⁹ and R¹⁰ represent, independently, a C₁ - C₁₈ alkyl substituted if appropriate by aryl, alkyl, aryloxy, alkyloxy, heteroatoms and/or heterocycles or C₆ - C₁₂ aryl substituted if appropriate by aryl, alkyl, aryloxy, alkyloxy, heteroatoms and/or heterocycles.

N,N-dimethylcyclohexylamine, dimethylcyclohexylamine, ethyldiisopropylamine, dimethylbutylamine, dimethylbenzylamine, triethylamine etc. are examples of amines which may be suitable within the scope of the invention. One very preferred amine is triethylamine.

The polyisocyanates (A) are generally prepared by mixing and reacting the synthesis components in any order. Preference is given to introducing the diisocyanate or polyisocyanate (a) initially, adding the synthesis components (b) and/or (c) together or in succession, and allowing reaction to take place until the reactive groups in (b) and (c) have been converted. Subsequently, if desired, the compounds (d) and/or (e) can be added.

Also conceivable is a reaction regime in which monomeric diisocyanates are reacted with one another as components (a) in the presence of the compounds (b) and/or (c). A reaction regime of this kind is described in WO 2008/116764, hereby fully incorporated by reference as part of the present disclosure content.

The reaction is carried out in general at a temperature of between 40°C and 170°C, preferably between 45°C and 160°C, more preferably between 50 and 150°C, and very preferably between 60 and 140°C.

The reaction can be accelerated by adding the typical catalysts (C) which catalyze the reaction of isocyanate groups with isocyanate-reactive groups. Suitable for this purpose in principle are all of the catalysts that are typically used in polyurethane chemistry.

These catalysts are, for example, organic amines, more particularly tertiary aliphatic, cycloaliphatic or aromatic amines, and/or Lewis-acidic organometallic compounds. Examples of suitable Lewis-acidic organometallic compounds include tin compounds, such as tin(II) compounds of organic carboxylic acids, for example, such as tin(II) acetate, tin(II) octoate, tin(II) ethylhexoate, and tin(II) laurate, for example, and the dialkyltin(IV) compounds of organic carboxylic acids, examples being dimethyltin diacetate, dibutyltin diacetate, dibutyltin dibutyrate, dibutyltin bis(2-ethylhexanoate), dibutyltin dilaurate, dibutyltin maleate, dioctyltin dilaurate, and dioctyltin diacetate. Also possible are metal complexes such as acetylacetonates of iron, of titanium, of aluminum, of zirconium, of manganese, of nickel, and of cobalt. Further metal catalysts are described by Blank et al. in Progress in Organic Coatings, 1999, vol. 35, pages 19-29.

Dialkyltin(IV) compounds of organic carboxylic acids are, for example, dimethyltin diacetate, dibutyltin diacetate, dibutyltin dibutyrate, dibutyltin bis(2-ethylhexanoate), dibutyltin dilaurate, dibutyltin maleate, dioctyltin dilaurate, and dioctyltin diacetate. Preference is given to dibutyltin diacetate and dibutyltin dilaurate. For toxicological reasons, tin compounds are less preferred, but are still frequently used in practice.

Other preferred Lewis-acidic organometallic compounds are zinc(II) dioctoate, zirconium acetylacetonate, and zirconium 2,2,6,6-tetramethyl-3,5-heptanedionate.

Bismuth and cobalt catalysts, cerium salts such as cerium octoates, and cesium salts can also be used as catalysts.

Bismuth catalysts are more particularly bismuth carboxylates, especially bismuth octoates, ethylhexanoates, neodecanoates or pivalates; examples are K-KAT 348 and XK-601 from King Industries, TIB KAT 716, 716LA, 716XLA, 718, 720, 789 from TIB Chemicals, and those from Shepherd Lausanne, and also catalyst mixtures of, for example, bismuth organyls and zinc organyls.

Preferred Lewis-acidic organometallic compounds are dimethyltin diacetate, dibutyltin dibutyrate, dibutyltin bis(2-ethylhexanoate), dibutyltin dilaurate, dioctyltin dilaurate, zirconium acetylacetonate, and zirconium 2,2,6,6-tetramethyl-3,5-heptanedionate.

Additionally, bismuth catalysts and cobalt catalysts, and cesium salts too, can be used as catalysts. Suitable cesium salts are those compounds in which the following anions are used: F-, Cl⁻, ClO⁻, ClO₃⁻, ClO₄⁻, Br-, I⁻, IO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻ , S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻, and (Cₙ₊₁H₂ₙ₋₂O₄)²⁻, where n stands for the numbers 1 to 20.

Preferred in this context are cesium and bismuth carboxylates in which the anion conforms to the formulae (CₙH₂ₙ₋₁O₂)⁻ and also (Cₙ₊₁H₂ₙ₋₂O₄)²⁻ with n being 1 to 20. Particularly preferred cesium salts contain monocarboxylate anions of the general formula (CₙH₂ₙ₋₁O₂)⁻, where n stands for the numbers 1 to 20. Particularly deserving of mention in this context are formate, acetate, propionate, hexanoate, and 2-ethylhexanoate.

The water-dispersible polyisocyanate (A), comprises as component (f) at least one solvent (E), which comprises (i) at least one, preferably exactly one, carboxylic acid ester group and (ii) a hydrophilic-lipophilic balance (HLB) value of 7.8 or less, preferably 7.7 or less.

The HLB value is calculated by the following formula HLB = 20 ^{∗} (Mₕ/M), wherein Mₕ means mole weight of heteroatoms and M means mole weight of the molecule.

The HLB value of a molecule is a value in the range of 0 to 20. The higher the HLB value is, the more hydrophilic a molecule is. An HLB value of 0 corresponds to a completely lipophilic/ hydrophobic molecule, and a value of 20 corresponds to a completely hydrophilic/lipophobic molecule.

The HLB values of selected solvents are as follows:

| Solvent | HLB value |
|---|---|
| propylene carbonate | 9,3 |
| propyleneglycol diacetate | 9,4 |
| methoxypropyl acetate | 8,3 |
| 3-methoxy-butyl acetate | 7,9 |
| ethoxyethyl propionate | 7,9 |
| butyldiglycol acetate | 7,7 |
| butylglycol acetate | 7,3 |
| butyl acetate | 7,0 |

A heteroatom is any atom that is not carbon or hydrogen. Typical heteroatoms are nitrogen, oxygen, sulfur, phosphorus, chlorine, bromine, and iodine.

In one empodiment of the present invention the reaction can be carried out in at least one solvent (E). After the reaction this at least one solvent is not removed, but instead the polyisocyanate with solvent is used directly.

The present invention further provides the addition of at least one solvent (E) to the reaction mixture after the end of the reaction and prior to dispersion in the binder.

Compound (f) is present in an amount of preferably 0,1 - 60 wt.%, particularly preferable 0,1 - 50 wt.%, especially preferable 0,1 - 40 wt.%, based on a total weight of component (a), (b), (c), (d), (e) and (f).
Carboxylic acid esters are, for example, n-butyl acetate, n-pentyl acetate (amyl acetate), 2-ethylhexyl acetate, tert-butyl acetate, iso-butyl acetate, n-propyl propionate, methylamyl acetate, n-butyl propionate, isobutyl isobutyrate, n-pentyl propionate and also the monoacetyl and diacetyl esters of ethylene glycol, diethylene glycol, triethylene glycol, propylene glycol, dipropylene glycol or tripropylene glycol, examples being butylglycol acetate and butyldiglycol acetate.

Additionally conceivable are poly(C₂ to C₃)alkylene glycol (C₁ to C₄)monoalkyl ether acetates such as, for example, acetic esters of mono- or dipropylene glycol monomethyl ether.

Preference is given to at least one solvent (E), which is based on the the following formulae (III), 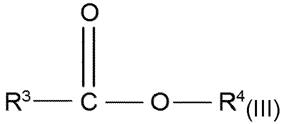 R³ and R⁴ independently of one another are alkyl, cycloalkyl, or aryl, it being possible for each of the stated radicals to be substituted by aryl, alkyl, aryloxy, alkyloxy, heteroatoms and/or heterocycles and comprises a hydrophilic-lipophilic balance (HLB) value of 7.8 or less, preferably 7.7 or less.

Definitions therein are as follows:

C₁ - C₁₈ alkyl substituted if appropriate by aryl, alkyl, aryloxy, alkyloxy, heteroatoms and/or heterocycles is for example methyl, ethyl, propyl, isopropyl, n-butyl, sec-butyl, tert-butyl, pentyl, hexyl, heptyl, octyl, 2-ethylhexyl, 2,4,4-trimethylpentyl, decyl, dodecyl, tetradecyl, hexadecyl, octadecyl, 1,1-dimethylpropyl, 1,1-dimethylbutyl, 1,1,3,3-tetramethylbutyl, benzyl, 1-phenylethyl, 2-phenylethyl, α,α-dimethylbenzyl, benzhydryl, p-tolylmethyl,1-(p-butylphenyl)ethyl, p-chlorobenzyl, 2,4-dichlorobenzyl, p-methoxybenzyl, m-ethoxybenzyl, 2-cyanoethyl, 2-cyanopropyl, 2-methoxycarbonethyl, 2-ethoxycarbonylethyl, 2-butoxycarbonylpropyl, 1,2-di(methoxycarbonyl)ethyl, 2-methoxyethyl, 2-ethoxyethyl, 2-butoxyethyl, diethoxymethyl, diethoxyethyl, 1,3-dioxolan-2-yl, 1,3-dioxan-2-yl, 2-methyl-1,3-dioxolan-2-yl, 4-methyl-1,3-dioxolan-2-yl, 2-isopropoxyethyl, 2-butoxypropyl, 2-octyloxyethyl, chloromethyl, 2-chloroethyl, trichloromethyl, trifluoromethyl, 1,1-dimethyl-2-chloroethyl, 2-methoxyisopropyl, 2-ethoxyethyl, butylthiomethyl, 2-dodecylthioethyl, 2-phenylthioethyl, 2,2,2-trifluoroethyl, 2-phenoxyethyl, 2-phenoxypropyl, 3-phenoxypropyl, 4-phenoxybutyl, 6-phenoxyhexyl, 2-methoxyethyl, 2-methoxypropyl, 3-methoxypropyl, 4-methoxybutyl, 6-methoxyhexyl, 2-ethoxyethyl, 2-ethoxypropyl, 3-ethoxypropyl, 4-ethoxybutyl, butylglykol, butyldiglykol, or 6-ethoxyhexyl,

C₆ - C₁₂ aryl substituted if appropriate by aryl, alkyl, aryloxy, alkyloxy, heteroatoms and/or heterocycles is for example phenyl, tolyl, xylyl, α-naphthyl, β-naphthyl, 4-biphenylyl, chlorophenyl, dichlorophenyl, trichlorophenyl, difluorophenyl, methylphenyl, dimethylphenyl, trimethylphenyl, ethylphenyl, diethylphenyl, *iso*-propylphenyl, tert-butylphenyl, dodecylphenyl, methoxyphenyl, dimethoxyphenyl, ethoxyphenyl, hexyloxyphenyl, methylnaphthyl, isopropyl-naphthyl, chloronaphthyl, ethoxynaphthyl, 2,6-dimethylphenyl, 2,4,6-trimethylphenyl, 2,6-dimethoxyphenyl, 2,6-dichlorophenyl, 4-bromophenyl, 2- or 4-nitrophenyl, 2,4- or 2,6-dinitrophenyl, 4-dimethylaminophenyl, 4-acetylphenyl, methoxyethylphenyl or ethoxymethylphenyl, and

C₅ - C₁₂ cycloalkyl substituted if appropriate by aryl, alkyl, aryloxy, alkyloxy, heteroatoms and/or heterocycles is for example cyclopentyl, cyclohexyl, cyclooctyl, cyclododecyl, methylcyclopentyl, dimethylcyclopentyl, methylcyclohexyl, dimethylcyclohexyl, diethylcyclohexyl, butylcyclohexyl, methoxycyclohexyl, dimethoxycyclohexyl, diethoxycyclohexyl, butylthiocyclohexyl, chlorocyclohexyl, dichlorocyclohexyl, dichlorocyclopentyl, and a saturated or unsaturated bicyclic system such as norbornyl or norbornenyl, for example.

Preferably R¹ and R² independently of one another can be unsubstituted alkyl or unsubstituted aryl, more preferably methyl, ethyl, isopropyl, tert-butyl, hexyl, octyl, nonyl, decyl, dodecyl, phenyl, butylglykol, butyldiglykol, or naphthyl, very preferably phenyl, methyl, ethyl, n-butyl, butylglykol, butyldiglykol, and 2-ethylhexyl, and more particularly methyl, ethyl, n-butyl, butylglykol, butyldiglykol, and 2-ethylhexyl.

Particular preferable R³ is alkyl, alkyloxy or alkoxyalkyl and R⁴ is alkyl or alkoxyalkyl.

Particular preference is given to n-butyl acetate, n-pentyl acetate (amyl acetate), 2-ethylhexyl acetate, tert-butyl acetate, iso-butyl acetate, n-propyl propionate, methylamyl acetate, n-butyl propionate, isobutyl isobutyrate, n-pentyl propionate, butyldiglykol acetate and butylglycol acetate.

Very particular preference is given to butyldiglykol acetate, butylglycol acetate and butyl acetate.

The mixture may further be admixed optionally with a further diisocyanate or, preferably, polyisocyanate (F), which can in principle be the same diisocyanates or polyisocyanates as set out above under (a), but which may also be different than said component (a).

Based on isocyanate groups, component (F) can be used in an amount from 0 to twenty times the amount of the polyisocyanate (A), preferably from 0 to ten times the amount.

The mixture may further be admixed optionally with one or more further solvents, for example esters, especially ethyleneglycol diacetate, propyleneglycol diacetate, methoxyethyl acetate, methoxypropyl acetate, 3-methoxy-butyl acetate, ethoxyethyl propionate, methyl acetate, ethyl acetate, propyl acetate, oxohexyl acetate esters, ethyldi(ethylene glycol) acetate, methyldi(propylene glycol) acetate, dibasic esters (alkanoyl carboxylic acid alkyl esters), especially esters of carbonic acid, for example propylene carbonate or ethylene carbonate, or cyclic esters or lactones, for example gamma-butyrolactone, or dialkyloligo(alkylene glycols), preferably dimethyloligo(alkylene glycols), for example di(propylene glycol)dimethylether (Proglyde® DMM) or ketones, for example methyl-ethyl-ketone or methyl-isobutyl-ketone.

The present invention provides for an aqueous coating composition comprising at least one water-dispersible polyisocyanate (A) and at least one aqueous polyol component (D) as binder and the preparation of two-component polyurethane coating materials or aqueous dispersion-based adhesives. For this preparation the polyisocy-anates (A) are mixed with an aqueous polyol component (D), preferably by being introduced into it. This is generally done with gentle to vigorous stirring, in order to disperse the polyisocyanates. It is an advantage of the polyisocyanates of the invention that they are readily dispersible in such aqueous solutions or dispersions of polyols as binders.

The process for preparing the aqueous coating composition comprises mixing a polyisocanate (A) with at least an aqueous polyol component (D) at a maximum shear rate of 10 to 1000 s⁻¹ , preferably 10 to 500 s⁻¹, more preferably 10 to 250 s⁻¹.
The mixing of the a polyisocanate (A) with at least an aqueous polyol component (D) is preferably performed by hand-incorporation, for example by hand-stirring using a spatula or spoon, or by gentle agitation up to vigourous shaking by hand."

The dispersible polyisocyanates (A) of the invention may optionally further be blended with additional polyisocyanates that have not been modified for dispersibility, examples being those polyisocyanates as listed under (a), and, after blending, can be reacted with the binders. In this case care should be taken to note that the polyisocyanates (A) of the invention must be equipped with the actively dispersing components (b) and (c) in such a way that they are sufficiently dispersible in order to disperse the polyisocyanates in their entirety (polyisocyanate (A) and polyisocyanates which have not been modified for dispersibility).

The preparation of coating compositions from the water-emulsifiable polyisocyanates containing isocyanurate groups and prepared in accordance with the invention is accomplished by reaction with aqueous solutions, emulsions or dispersions of polyols: polyacrylate-ol, polyester-ol, polyurethane-ol, polyether-ol, and polycarbonate-ol dispersions, and also their hybrids and/or mixtures of the stated polyols. Hybrids means graft copolymers and other chemical reaction products which include chemically attached molecular moieties having different (or else like) groups from among those stated. Preference is given to polyacrylate-polyol dispersions, polyester-polyol dispersions, polyether-polyol dispersions, polyurethane-polyol dispersions, polycarbonate-polyol dispersions, and their hybrids.

Polyacrylate-ols can be prepared as primary or secondary dispersions, emulsions, and solutions. They are prepared from olefinically unsaturated monomers. These are, firstly, comonomers containing acid groups, having for example carboxylic, sulfonic acid and/or phosphonic acid groups or their salts, such as (meth)acrylic acid, vinylsulfonic acid or vinylphosphonic acid, for example. These are, secondly, comonomers containing hydroxyl groups, such as hydroxyalkyl esters or amides of (meth)acrylic acid, such as 2-hydroxyethyl and 2 or 3-hydroxypropyl (meth)acrylate, for example. These are, thirdly, unsaturated comonomers which contain neither acidic groups nor hydroxyl groups, such as alkyl esters of (meth)acrylic acid, styrene and derivatives, (meth)acrylonitrile, vinyl esters, vinyl halides, vinyl imidazole, etc. The properties can be influenced, for example, via the composition of the polymer, and/or, for example, via the glass transition temperatures of the comonomers (with different hardness).

Polyacrylate-ols for aqueous applications are described for example in EP 358979 (US 5075370), EP 557844 (US 6376602), EP 1141066 (US 6528573) or 496210 (US 5304400). One example of a commercially available secondary polyacrylate emulsion is Bayhydrol® A 145 (a product of Covestro). Examples of a primary polyacrylate emulsion are Bayhydrol® VP LS 2318 (a product of Covestro) and Luhydran® products from BASF AG.
Other examples are Macrynal® VSM 6299w/42WA from Cytec, and Setalux® AQ products from Nuplex Resins, such as Setalux® 6510 AQ-42, Setalux® 6511 AQ-47, Setalux® 6520 AQ-45, Setalux® 6801 AQ-24, Setalux® 6802 AQ-24, and Joncryl® from BASF Resins.

Polyacrylate-ols may also have a heterogeneous structure, as is the case for core-shell structures.

Polyester-ols for aqueous applications are described for example in EP 537568 (US 5344873), EP 610450 (US 6319981, polycondensation resin), and EP 751197 (US 5741849, polyester-polyurethane mixture). Polyester-ols for aqueous applications are, for example, WorléePol products from Worlee-Chemie GmbH, Necowel® products from Ashland-Sudchemie-Kernfest GmbH, and Setalux® 6306 SS-60 from Nuplex Resins.

Polyurethane-polyol dispersions for aqueous applications are described for example in EP 469389 (US 559805). They are marketed, for example, under the brand name Daotan® from DSM NV.

Polyether-ols for aqueous applications are described for example in EP 758007.

Hybrids and mixtures of the various polyols are described for example in EP 424705 (US 417998), EP 496205 (US 5387642), EP 542085 (5308912, polyacrylate/polyether mixture), EP 542105 (US 5331039), EP 543228 (US 5336711, polyester/polyacrylate hybrids), EP 578940 (US 5349041, polyester/urethane/carbonate), EP 758007 (US 5750613, polyacrylate-polyether mixture), EP 751197 (US 5741849), EP 1141065 (US 6590028).

Polyesters/polyacrylates are described for example in EP 678536 (US 5654391). One example of a secondary polyester/polyacrylate emulsion is Bayhydrol® VP LS 2139/2 (a product of Bayer MaterialScience).

To incorporate the water-emulsifiable polyisocyanates of the invention it is generally enough to distribute the inventively obtained polyisocyanate in the aqueous dispersion of the polyol. Generating the emulsion generally requires a maximum shear rate of 10 to 1000 s⁻¹, preferably 10 to 500 s⁻¹, more preferably 10 to 250 s⁻¹. The shear rate is defined according to DIN 1342-1.

The water-emulsifiable polyisocyanates of the invention comprising said at least one solvent (E) can be mixed advantageously at low shear rates, for example by hand-incorporation, with the aqueous dispersion of the polyol. Additionally, the optical properties of the coatings obtained with these coating materials are improved, when mixed at low shear rates, for example by hand-incorporation.

The dispersions generally have a solids content of 10% to 85%, preferably of 20% to 70% by weight and a viscosity of 10 to 1500 mPa^{∗}s.

For the preparation of a coating composition, polyisocyanate (A) and also, optionally, (F) and binders are mixed with one another in a molar ratio of isocyanate groups to isocyanate-reactive groups of 0.1:1 to 10:1, preferably 0.2:1 to 5:1, more preferably 0.3:1 to 3:1, and very preferably 0.5:1 to 2.5:1, it also being possible, if appropriate, for further, typical coatings constituents to be mixed in, and the final composition is applied to the substrate.

In one embodiment of the invention, when using a primary (polyacrylate) dispersion, the ratio of NCO to NCO-reactive groups is from 5:1 to 1:5, preferably from 2:1 to 1:2, and more preferably about 1:1.

In another embodiment of the invention, when using a secondary (polyacrylate) dispersion, the ratio of NCO to NCO-reactive groups is from 0.8:1 to 2:1, more particularly from 1.2:1 to 1.7:1.

Curing typically takes place until the cured materials can be handled further. The properties associated with this are, for example, dust drying, through-drying, blocking resistance or packability.

In one preferred embodiment the curing takes place at room temperature within not more than 12 hours, preferably up to 8 hours, more preferably up to 6 hours and very preferably up to 4 hours.

In another preferred version the curing takes place, for example, for half an hour at temperatures up to 80°C. After cooling, a room-temperature postcure may be necessary in addition.

The coating of the substrates takes place in accordance with typical methods known to the skilled worker, which involve applying at least one coating composition in the desired thickness to the substrate that is to be coated, and removing any volatile constituents that may be present in the coating composition, if appropriate with heating. This operation can if desired be repeated one or more times. Application to the substrate may take place in a known way, as for example by spraying, troweling, knifecoating, brushing, rolling, roller coating, pouring, laminating, injection backmolding or coextruding.

The thickness of a film of this kind to be cured can be from 0.1 µm up to several mm, preferably from 1 to 2000 µm, more preferably 5 to 200 µm, very preferably from 10 to 60 µm (based on the coating material in the state in which the solvent has been removed from the coating material).

Also provided by the present invention are substrates coated with a multicoat paint system of the invention.

Polyurethane coating materials of this kind are especially suitable for applications requiring a particularly high level of application reliability, external weathering resistance, optical qualities, solvent resistance, chemical resistance, and water resistance.

The resulting coating compositions and coating formulations are suitable for coating substrates such as wood, wood veneer, paper, paperboard, cardboard, textile, film, leather, nonwoven, plastics surfaces, glass, ceramic, mineral building materials, such as cement moldings, fiber-cement slabs or metals, each of which may optionally have been precoated and/or pretreated, more particularly for plastics surfaces.

Coating compositions of this kind are suitable as or in interior or exterior coatings, i.e., applications of this kind involving exposure to daylight, preferably of parts of buildings, coatings on (large) vehicles, trains and aircraft, and industrial applications, decorative coatings, bridges, buildings, power masts, tanks, containers, pipelines, power stations, chemical plants, ships, cranes, posts, sheet piling, valves, pipes, fittings, flanges, couplings, halls, roofs, and structural steel, furniture, windows, doors, woodblock flooring, can coating and coil coating, for floor coverings, as in the case of parking levels, or in hospitals, wood coatings for furniture and flooring application, and in automobile finishes as OEM and refinish application.

Coating compositions of this kind are preferably used at temperatures between ambient temperature to 80°C, preferably to 60°C, more preferably to 40°C. The articles in question here are preferably those which cannot be cured at high temperatures, such as large machines, aircraft, large-volume vehicles, and refinish applications.

Very preferably the resulting coating compositions and coating formulations are used for coatings of agricultural, construction and earthmoving equipment, for example agricultural machinery, tractors, excavators, cranes, for wood coatings for furniture, preferably kitchen parts, and flooring, preferably for on-side parquet coatings, beton coatings and plastic coatings, and for coatings in automotive and transportation application.

The coating compositions of the invention are employed more particularly as clearcoat, basecoat, and topcoat materials, primers, and surfacers.

Polyisocyanate compositions of this kind can be used as curing agents for producing coating materials, adhesives, and sealants.

Likewise provided by the present invention, accordingly, are coating materials, adhesives, and sealants comprising at least one polyisocyanate composition of the invention, and also substrates which are coated, bonded or sealed using them.

Figures in ppm or percent that are used in this specification relate, unless otherwise indicated, to weight percentages and ppm by weight.

The examples which follow are intended to illustrate the invention.

It is an advantage of the water dispersible polyisocyanates (A) of the invention that they are miscible with aqueous polyol dispersions under low shear rates at high concentrations of components (a), (b) and (c), which results in a reduced VOC in the resulting coating compositions.

### Examples

### Polyisocyanate A

Polyisocyanate was prepared by trimerizing some of the isocyanate groups of 1,6-diisocyanatohexane (HDI) and containing isocyanurate groups, said polyisocyanate being composed substantially of tris(6-isocyanatohexyl) isocyanurate and its higher homologs, with an NCO content of 22.2% and a viscosity at 23°C of 2800 mPa^{∗}s (commericially available as BASONAT® HI100 at BASF SE, Ludwigshafen, Germany)

### Hydrophilic Compound B1

Monofunctional polyethylene oxide was prepared starting from methanol and with potassium hydroxide catalysis, with an average OH number of 160 mg KOH/g, measured according to DIN 53 240, corresponding to a molecular weight of 350 g/mol. The residues of catalyst still present were subsequently neutralized with acetic acid and the product was desalinated. In the course of this procedure, potassium acetate formed was also removed.

### Hydrophilic Compound B2

Mixture of butylphosphate and dibutylphosphate (molar ratio 1,3/1,0) neutralized with triethylamine.

### Example 1

250g Polyisocyanate A, 8,8g hydrophilic compound B1 and 16g hydrophilic compound B2 were reacted at 90°C for 3 hours. The product obtained had an NCO content of 19.3% and a viscosity of 3700 mPas at 23°C.

### Coating Formulation and Properties

### Formulation

Under stirring at 1000 rpm with a lab stirrer, to 532,7 g Bayhydrol A 145 (available from Bayer MaterialScience/Covestro, solids content: 45%, OH content: 3,3% calculated based on solids) was subsequently added 22,05 g Borchi Gen HMP (adhesion promoter), 3,36 g Borchi Gol 3739 (former Baysilone 3739, substrate wetting agent), 35,0 g deionized water and 8,4 g of a mixture of dimethylethanolamine:water 1:1 (adjustment to pH = 8,2-8,5), followed by 98,49 g deionized water. The mixture was stirred for 45 min., and let stand without stirring for 1 d, to give 700 g of formulated dispersion component with a solids content of 35,0%.

The polyisocyanate from the above example was diluted to a solids content of 70% or 80% respectively with solvent. Mixing was performed at 1200-1300 rpm with a lab stirrer for 5 min. After degassing with nitrogen, the diluted isocyanate was let standing without stirring for 1 d, to give the polyisocyanat component.

The dispersion component and the polyisocyanate component were mixed at an index of 150, *i.e.* such, that in the lacquer hydroxy and isocyanate groups have a stoichiometric ratio of 1:1,5. To 25 g of the dispersion component were added 8,13 g (in case of the usage of a 70% polyisocyanate solution) or 6,69 g (in case of the usage of a 80% polyisocyanate solution), respectively, of the polyisocyanate component. After addition and waiting for 30 sec., the mixture was stirred for 30 seconds by hand using a wooden spatula. To adjust the viscosity 1,8 g (in case of the usage of a 70% polyisocyanate solution) or 1,7 g (in case of the usage of a 80% polyisocyanate solution) of deion. water, respectively, were added, to give the water-based two-component coating system.

To assess hand miscibility, two procedures were used:
a. films: films were prepared on glas *via* drawdown bar at 180 µ wet layer thickness; the films were assessed visualy in terms of appearance, transparency, existence of coagulum and if so, at which diameter
b. thicker layers: The lacquer was cast on a glass plate. The glass plate was put at a 5 ° angle and the assessment was also done visually: optical appearance, coagulum and if so, at which diameter.

**Graduations for both methods:**

| | |
|---|---|
| clear | = best score |
| hazy | = second-best score |
| slightly turbid | = third-best score |
| turbid | = fourth-best score |
| coagulum | = worst score |

**Table 1: Evaluation of films (cf., above, method a)**

| Example or comparative example (CE), respectively | Solvent | 70% solution of the polyisocyanate | 80% solution of the polyisocyanate |
|---|---|---|---|
| CE1 | Butoxyl®^{[1]} | slightly turbid | slightly turbid |
| CE2 | propylene carboante | slightly turbid | slightly turbid |
| CE3 | MPA^{[2]} | turbid | turbid |
| CE4 | Proglyde® DMM^{[3]} | slightly tubid | turbid |
| CE5 | PGDA^{[4]} | hazy | slightly turbid |
| CE6 | BGA^{[5]}:DMM 1:1 | turbid | turbid |
| CE7 | EEP^{[6]} | slightly turbid | slightly turbid |
| Example 1 | BDGA^{[7]} | clear | clear |
| Example 2 | BGA^{[5]} | clear | clear |
| Example 3 | butyl acetate | hazy | clear |

**Table 2: Evaluation of thicker layers (cf., above, method b)**

| Example or comparative example (CE), respectively | Solvent | 70% solution of the polyisocyanate | 80% solution of the polyisocyanate |
|---|---|---|---|
| CE1 | Butoxyl®^{[1]} | turbid | turbid |
| CE1 | propylene carbonate | turbid | turbid |
| CE3 | MPA^{[2]} | turbid | turbid |
| CE4 | Proglyde DMM^{[3]} | turbid | turbid |
| CE5 | PGDA^{[4]} | slightly turbid | turbid |
| CE6 | BGA^{[5]}:DMM 1:1 | slightly turbid | slightly turbid |
| CE7 | EEP^{[6]} | turbid | turbid |
| Example 1 | BDGA^{[7]} | hazy | hazy |
| Example 2 | BGA^{[5]} | hazy | hazy |
| Example 3 | butyl acetate | slightly turbid | hazy |

| | | | |
|---|---|---|---|
| [1] 3-Methoxy-butyl acetate (from Celanese) [2] Methoxypropyl acetate [3] Di(propyleneglycol)dimethylether mixture of isomers (from Dow Chemical) [4] Propyleneglycol diacetate [5] Butylglycol acetate [6] O-Ethyl-3-ethoxy propionate [7] Butyldiglycol acetate | | | |

In Examples 1 to 3 the water emulsifiable polyisocyanates were mixed by hand with the aqueous dispersion of the polyol and show improved optical properties.

## Claims

1. A water-dispersible polyisocyanate (A), comprising as components
(a) at least one diisocyanate or polyisocyanate,
(b) at least one surfactant comprising an amine and a mixture of compounds based on the following formulae (I) and (II):, 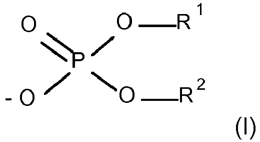 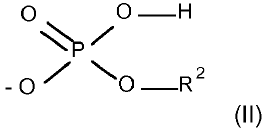 in which
R¹ and R² independently of one another are alkyl, cycloalkyl or aryl, it being possible for each of the stated radicals to be substituted by aryl, alkyl, aryloxy, alkyloxy, heteroatoms and/or heterocycles,
said mixture of compounds of formulae (I) and (II) being **characterised in that** the molar ratio between compound (II), i.e. the monoester-type compound, and compound (I), i.e. the diester-type compound, is from 5:95 to 95:5,
(c) at least one monofunctional polyalkylene glycol,
(d) optionally at least one high molecular mass diol or polyol,
(e) optionally at least one low molecular mass diol or polyol, and
(f) at least one solvent (E)
which comprises (i) at least one carboxylic acid ester group and (ii) a hydrophilic-lipophilic balance (HLB) value of 7,8 or less calculated by the following formula HLB = 20 ^{∗} (Mₕ/M), wherein Mₕ means mole weight of heteroatoms and M means mole weight of the molecule.

2. The water-dispersible polyisocyanate (A) according to claim 1, wherein solvent (E) is based on the following formulae (III), 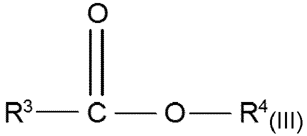 in which
R³ and R⁴ independently of one another are alkyl, cycloalkyl, alkoxy or aryl, it being possible for each of the stated radicals to be substituted by aryl, alkyl, aryloxy, alkyloxy, heteroatoms and/or heterocycles
and comprises a hydrophilic-lipophilic balance (HLB) value of 7,8 or less calculated by the following formula HLB = 20 ^{∗} (Mₕ/M), wherein Mₕ means mole weight of heteroatoms and M means mole weight of the molecule.

3. The water-dispersible polyisocyanate (A) according to claim 2, wherein in formulae (III) R³ is alkyl, alkyloxy or alkoxyalkyl and R⁴ is alkyl or alkoxyalkyl.

4. The water-dispersible polyisocyanate (A) according to any one of the preceding claims, wherein compound (f) is present in an amount of 0,1 - 60 wt.%, based on a total weight of component (a), (b), (c), (d), (e) and (f).

5. The water-dispersible polyisocyanate (A) according to any one of the preceding claims, wherein solvent (E) is butyldiglykolacetat, butylglycolacetat or butylacetat.

6. The water-dispersible polyisocyanate (A) according to either of the preceding claims, wherein component (a) is a polyisocyanate containing allophanate and/or isocyanurate groups which is based on isophorone diisocyanate and/or 1,6-hexamethylene diisocyanate.

7. The water-dispersible polyisocyanate (A) according to any of the preceding claims, wherein in component (b) R¹ and R² independently of one another are selected from the group consisting of phenyl, methyl, ethyl, n-butyl, and 2-ethylhexyl.

8. The water-dispersible polyisocyanate (A) according to any one of the preceding claims, wherein the compound (c) fulfills the formula
R⁵-O-[-Xᵢ-]ₖ-H
in which
R⁵ is C₁ - C₂₀ alkyl, C₂ - C₂₀ alkyl uninterrupted or interrupted by one or more oxygen and/or sulfur atoms and/or by one or more substituted or unsubstituted imino groups, or is C₆ - C₁₂ aryl, C₅ - C₁₂ cycloalkyl or a five- or six-membered heterocycle containing oxygen, nitrogen and/or sulfur atoms, it being possible for each of the stated radicals to be substituted by functional groups, aryl, alkyl, aryloxy, alkyloxy, halogen, heteroatoms and/or heterocycles,
k is an integer from 5 to 30, and
each Xᵢ for i = 1 to k can be selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, and -CHPh-CH₂-O-,
in which Ph is phenyl and Vin is vinyl.

9. The water-dispersible polyisocyanate (A) according to claim 8, wherein k is an integer from 7 to 13.

10. An aqueous coating composition comprising at least one water-dispersible polyisocyanate (A) according to any one of the preceding claims and at least one aqueous polyol component (D).

11. An aqueous coating composition according to claim 10, wherein the aqueous polyol component (D) is selected from the group consisting of polyacrylate-polyol dispersions, polyester-polyol dispersions, polyether-polyol dispersions, polyurethane-polyol dispersions, polycarbonate-polyol dispersions, and their hybrids.

12. A process for preparing an aqueous coating compositions, which comprises mixing a polyisocanate (A) according to any of claims 1 to 9 with at least an aqueous polyol component (D) at a maximum shear rate of 10 to 1000 s⁻¹.

13. The use of a coating composition comprising at least one water-dispersible polyisocyanate (A) according to any one of claims 1 to 11 for coating wood, wood veneer, paper, paperboard, cardboard, textile, film, leather, nonwoven, plastics surfaces, glass, ceramic, mineral building materials, cement moldings, fiber-cement slabs or metals, each of which may optionally have been precoated or pretreated.

14. The use of a coating composition comprising at least one water-dispersible polyisocyanate (A) according to any one of claims 1 to 11 for coatings of agricultural, construction and earthmoving equipment, like agricultural machinery, tractors, excavators, cranes, for wood coatings for furniture, preferably kitchen parts, and flooring, preferably for on-side parquet coatings, beton coatings and plastic coatings, and for coatings in automotive and transportation application.

15. A coating material, adhesive or sealant comprising at least one polyisocyanate according to any one of claims 1 to 11.

## Patentansprüche

1. Wasserdispergierbares Polyisocyanat (A), enthaltend als Komponenten
(a) mindestens ein Di- oder Polyisocyanat,
(b) mindestens ein Tensid, enthaltend ein Amin und ein Gemisch von Verbindungen auf der Basis der folgenden Formeln (I) und (II): 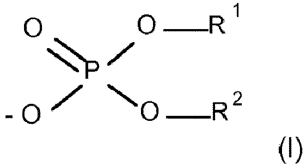 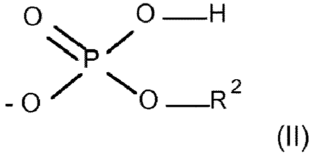 worin
R¹ und R² unabhängig voneinander Alkyl, Cycloalkyl oder Aryl, wobei die genannten Reste jeweils durch Aryl, Alkyl, Aryloxy, Alkyloxy, Heteroatome und/oder Heterocyclen substituiert sein können, bedeuten,
wobei das Gemisch von Verbindungen der Formeln (I) und (II) **dadurch gekennzeichnet ist, dass** das Molverhältnis zwischen Verbindung (II), d.h. der Verbindung vom Monoester-Typ, und Verbindung (I), d.h. der Verbindung vom Diester-Typ, 5:95 bis 95:5 beträgt,
(c) mindestens ein monofunktionelles Polyalkylenglykol,
(d) gegebenenfalls mindestens ein höhermolekulares Di- oder Polyol,
(e) gegebenenfalls mindestens ein niedermolekulares Di- oder Polyol, und
(f) mindestens ein Lösungsmittel (E) mit (i) mindestens einer Carbonsäureestergruppe und (ii) einem HLB-Wert (HLB = hydrophilic-lipophilic balance) von 7,8 oder weniger, berechnet anhand der folgenden Formel HLB = 20 ^{∗} (M_{h/}M), wobei Mₕ das Molgewicht von Heteroatomen bedeutet und M das Molgewicht des Moleküls bedeutet.

2. Wasserdispergierbares Polyisocyanat (A) nach Anspruch 1, wobei das Lösungsmittel (E) auf den folgenden Formeln (III) basiert, 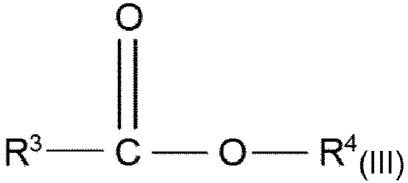 worin
R³ und R⁴ unabhängig voneinander Alkyl, Cycloalkyl, Alkoxy oder Aryl bedeuten, wobei jeder der angegebenen Reste durch Aryl, Alkyl, Aryloxy, Alkyloxy, Heteroatome und/oder Heterocyclen substituiert sein kann,
und einen HLB-Wert (HLB = hydrophilic-lipophilic balance) von 7,8 oder weniger, berechnet anhand der folgenden Formel HLB = 20 ^{∗} (Mₕ/M), wobei Mₕ das Molgewicht von Heteroatomen bedeutet und M das Molgewicht des Moleküls bedeutet, aufweist.

3. Wasserdispergierbares Polyisocyanat (A) nach Anspruch 2, wobei in den Formeln (III) R³ Alkyl, Alkyloxy oder Alkoxyalkyl bedeutet und R⁴ Alkyl oder Alkoxyalkyl bedeutet.

4. Wasserdispergierbares Polyisocyanat (A) nach einem der vorhergehenden Ansprüche, wobei Verbindung (f) in einer Menge von 0,1-60 Gew.-%, bezogen auf das Gesamtgewicht der Komponenten (a), (b), (c), (d), (e) und (f), vorliegt.

5. Wasserdispergierbares Polyisocyanat (A) nach einem der vorhergehenden Ansprüche, wobei es sich bei dem Lösungsmittel (E) um Butyldiglykolacetat, Butylglykolacetat oder Butylacetat handelt.

6. Wasserdispergierbares Polyisocyanat (A) nach einem der vorhergehenden Ansprüche, wobei es sich bei der Komponente (a) um ein allophanat- und/oder isocyanuratgruppenhaltiges Polyisocyanat auf Basis von Isophorondiisocyanat und/oder 1,6-Hexamethylendiisocyanat handelt.

7. Wasserdispergierbares Polyisocyanat (A) nach einem der vorhergehenden Ansprüche, wobei in Komponente (b) R¹ und R² unabhängig voneinander aus der Gruppe bestehend aus Phenyl, Methyl, Ethyl, n-Butyl und 2-Ethylhexyl ausgewählt sind.

8. Wasserdispergierbares Polyisocyanat (A) nach einem der vorhergehenden Ansprüche, wobei die Verbindung (c) die Formel
R⁵-O-[-Xᵢ-]ₖ-H
erfüllt, wobei
R⁵ C₁-C₂₀-Alkyl, gegebenenfalls durch ein oder mehrere Sauerstoff- und/oder Schwefelatome und/oder eine oder mehrere substituierte oder unsubstituierte Iminogruppen unterbrochenes C₂-C₂₀-Alkyl, C₆-C₁₂-Aryl, C₅-C₁₂-Cycloalkyl oder einen fünf- oder sechsgliedrigen, Sauerstoff-, Stickstoff- und/oder Schwefelatome aufweisenden Heterocyclus bedeutet, wobei die genannten Reste jeweils durch funktionelle Gruppen, Aryl, Alkyl, Aryloxy, Alkyloxy, Halogen, Heteroatome und/oder Heterocyclen substituiert sein können,
k für eine ganze Zahl von 5 bis 30 steht und
jedes Xᵢ für i = 1 bis k unabhängig voneinander ausgewählt sein kann aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, worin Ph für Phenyl und Vin für Vinyl steht.

9. Wasserdispergierbares Polyisocyanat (A) nach Anspruch 8, wobei k für eine ganze Zahl von 7 bis 13 steht.

10. Wässrige Beschichtungsmasse, enthaltend mindestens ein wasserdispergierbares Polyisocyanat (A) nach einem der vorhergehenden Ansprüche und mindestens eine wässrige Polyolkomponente (D).

11. Wässrige Beschichtungsmasse nach Anspruch 10, wobei die wässrige Polyolkomponente (D) aus der Gruppe bestehend aus Polyacrylatpolyoldispersionen, Polyesterpolyoldispersionen, Polyetherpolyoldispersionen, Polyurethanpolyoldispersionen, Polycarbonatpolyoldispersionen und deren Hybriden ausgewählt ist.

12. Verfahren zur Herstellung einer wässrigen Beschichtungsmasse, bei dem man ein Polyisocyanat (A) nach einem der Ansprüche 1 bis 9 bei einer maximalen Scherrate von 10 bis 1000 s⁻¹ mit mindestens einer wässrigen Polyolkomponente (D) mischt.

13. Verwendung einer Beschichtungsmasse, enthaltend mindestens ein wasserdispergierbares Polyisocyanat (A) nach einem der Ansprüche 1 bis 11, zum Beschichten von Holz, Holzfurnier, Papier, Pappe, Karton, Textil, Folie, Leder, Vlies, Kunststoffoberflächen, Glas, Keramik, mineralischen Baustoffen, Zement-Formsteinen, Faserzementplatten oder Metallen, die jeweils gegebenenfalls vorbeschichtet oder vorbehandelt sein können.

14. Verwendung einer Beschichtungsmasse, enthaltend mindestens ein wasserdispergierbares Polyisocyanat (A) nach einem der Ansprüche 1 bis 11 für Beschichtungen von Landwirtschafts-, Bau- und Erdbewegungsmaschinen wie Landmaschinen, Traktoren, Baggern, Kränen, für Holzbeschichtungen für Möbel, vorzugsweise Küchenteile, und Fußböden, vorzugsweise für Vor-Ort-Parkettbeschichtungen, Betonbeschichtungen und Kunststoffbeschichtungen und für Beschichtungen im Automobil- und Transportsektor.

15. Lack, Klebstoff oder Dichtungsmasse, enthaltend mindestens ein Polyisocyanat nach einem der Ansprüche 1 bis 11.

## Revendications

1. Polyisocyanate (A) dispersible dans l'eau, comprenant comme composants
(a) au moins un diisocyanate ou polyisocyanate,
(b) au moins un tensioactif comprenant une amine et un mélange de composés basés sur les formules suivantes (I) et (II) : 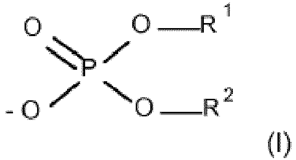 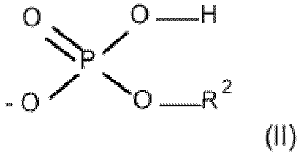 dans lesquelles
R¹ et R² indépendamment l'un de l'autre sont alkyle, cycloalkyle ou aryle, où il est possible pour chacun des radicaux mentionnés d'être substitué par aryle, alkyle, aryloxyle, alkyloxyle, des hétéroatomes et/ou des hétérocycles,
ledit mélange de composés des formules (I) et (II) étant **caractérisé en ce que** le rapport molaire entre le composé (II), c'est-à-dire le composé de type monoester, et le composé (I), c'est-à-dire le composé de type diester, étant de 5:95 à 95:5,
(c) au moins un polyalkylèneglycol monofonctionnel,
(d) éventuellement au moins un diol ou polyol, de masse moléculaire élevée,
(e) éventuellement au moins un diol ou polyol, de masse moléculaire faible, et
(f) au moins un solvant (E)
qui comprend (i) au moins un groupe ester d'acide carboxylique et (ii) une valeur d'équilibre hydrophile-lipophile (EHL) inférieure ou égale à 7,8 calculée par la formule suivante EHL = 20 ^{∗} (Mₕ/M), Mₕ signifiant le poids moléculaire d'hétéroatomes et M signifiant le poids moléculaire de la molécule.

2. Polyisocyanate (A) dispersible dans l'eau selon la revendication 1, le solvant (E) étant basé sur la formule suivante (III), 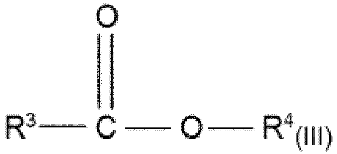 dans laquelle
R³ et R⁴ indépendamment l'un de l'autre sont alkyle, cycloalkyle, alcoxyle ou aryle, où il est possible pour chacun des radicaux mentionnés d'être substitué par aryle, alkyle, aryloxyle, alkyloxyle, des hétéroatomes et/ou des hétérocycles
et le solvant comprenant une valeur d'équilibre hydrophile-lipophile (EHL) inférieure ou égale à 7,8 calculée par la formule suivante EHL = 20 ^{∗} (Mₕ/M), Mₕ signifiant le poids moléculaire d'hétéroatomes et M signifiant le poids moléculaire de la molécule.

3. Polyisocyanate (A) dispersible dans l'eau selon la revendication 2, dans lequel dans la formule (III) R³ est alkyle, alkyloxyle ou alcoxyalkyle et R⁴ est alkyle ou alcoxyalkyle.

4. Polyisocyanate (A) dispersible dans l'eau selon l'une quelconque des revendications précédentes, le composé (f) étant présent en une quantité de 0,1 à 60 % en poids, sur la base du poids total des composants (a), (b), (c), (d), (e) et (f).

5. Polyisocyanate (A) dispersible dans l'eau selon l'une quelconque des revendications précédentes, le solvant (E) étant l'acétate de butyldiglycol, l'acétate de butylglycol ou l'acétate de butyle.

6. Polyisocyanate (A) dispersible dans l'eau selon l'une quelconque des revendications précédentes, le composant (a) étant un polyisocyanate contenant des groupes allophanate et/ou isocyanurate qui est basé sur le diisocyanate d'isophorone et/ou le diisocyanate d'1,6-hexaméthylène.

7. Polyisocyanate (A) dispersible dans l'eau selon l'une quelconque des revendications précédentes, dans lequel dans le composant (b) R¹ et R² indépendamment l'un de l'autre sont choisis dans le groupe constitué par phényle, méthyle, éthyle, n-butyle, et 2-éthylhexyle.

8. Polyisocyanate (A) dispersible dans l'eau selon l'une quelconque des revendications précédentes, le composé (c) correspondant à la formule
R⁵-O-[-Xᵢ-]ₖ-H
dans laquelle
R⁵ est C₁₋₂₀-alkyle, C₂₋₂₀-alkyle non interrompu ou interrompu par un ou plusieurs atomes d'oxygène et/ou de soufre et/ou par un ou plusieurs groupes imino substitués ou non substitués, ou est C₆₋₁₂-aryle, C₅₋₁₂-cycloalkyle ou un hétérocycle à cinq ou six chaînons contenant des atomes d'oxygène, d'azote et/ou de soufre, où il est possible pour chacun des radicaux mentionnés d'être substitué par des groupes fonctionnels, aryle, alkyle, aryloxyle, alkyloxyle, halogène, des hétéroatomes et/ou des hétérocycles,
k est un entier de 5 à 30, et
chaque Xᵢ pour i = 1 à k peut être choisi indépendamment dans le groupe constitué par-CH₂-CH₂-O, -CH₂-CH(CH₃)-O-, -CH(CH₃)-CH₂-O-, -CH₂-C(CH₃)₂-O-, -C(CH₃)₂-CH₂-O-,-CH₂-CHVin-O-, -CHVin-CH₂-O-, -CH₂-CHPh-O-, et -CHPh-CH₂-O-, dans lesquels Ph est phényle et Vin est vinyle.

9. Polyisocyanate (A) dispersible dans l'eau selon la revendication 8, k étant un entier de 7 à 13.

10. Composition aqueuse de revêtement comprenant au moins un polyisocyanate (A) dispersible dans l'eau selon l'une quelconque des revendications précédentes et au moins un composant aqueux (D) de polyol.

11. Composition aqueuse de revêtement selon la revendication 10, le composant aqueux (D) de polyol étant choisi dans le groupe des dispersions polyacrylate-polyol, des dispersions polyester-polyol, des dispersions polyéther-polyol, des dispersions polyuréthane-polyol, des dispersions polycarbonate-polyol, et leurs hybrides.

12. Procédé pour la préparation d'une composition aqueuse de revêtement, qui comprend le mélange d'un polyisocyanate (A) selon l'une quelconque des revendications 1 à 9 avec au moins un composant aqueux (D) de polyol à une vitesse maximale de cisaillement de 10 à 1000 s⁻¹.

13. Utilisation d'une composition de revêtement comprenant au moins un polyisocyanate (A) dispersible dans l'eau selon l'une quelconque des revendications 1 à 11 pour le revêtement de bois, de placage de bois, de papier, de papier cartonné, de carton, de textile, de film, de cuir, de non tissé, de surfaces de plastiques, de verre, de céramique, de matériaux minéraux de construction, de moulages en ciment, de dalles en fibrociment ou de métaux, chacun desquels ayant éventuellement pu être pré-revêtu ou prétraité.

14. Utilisation d'une composition de revêtement comprenant au moins un polyisocyanate (A) dispersible dans l'eau selon l'une quelconque des revendications 1 à 11 pour des revêtements de matériel agricole, de construction et de terrassement, comme une machine agricole, des tracteurs, des excavateurs, des grues, pour des revêtements du bois pour des meubles, préférablement des pièces détachées de cuisine, et du plancher, préférablement pour des revêtements de parquet sur le côté, des revêtements de béton et des revêtements de plastique, et pour des revêtements dans des applications automobiles et de transport.

15. Matériau de revêtement, adhésif ou agent d'étanchéité comprenant au moins un polyisocyanate selon l'une quelconque des revendications 1 à 11.
